(19) Europäisches Patentamt
European Patent Office
Office européen des brevets

(11) Veröffentlichungsnummer: **0 335 159**
**A1**

(12) # EUROPÄISCHE PATENTANMELDUNG

(21) Anmeldenummer: **89104345.7**

(22) Anmeldetag: **11.03.89**

(51) Int. Cl.4: **C08K 3/30 , C09C 1/02 , C01F 11/46**

(30) Priorität: **26.03.88 DE 3810423**

(43) Veröffentlichungstag der Anmeldung:
**04.10.89 Patentblatt 89/40**

(84) Benannte Vertragsstaaten:
**AT CH DE ES FR GB IT LI NL**

(71) Anmelder: **BAYER AG**
**D-5090 Leverkusen 1 Bayerwerk(DE)**

Anmelder: **METALLGESELLSCHAFT AKTIENGESELLSCHAFT**
**Reuterweg 14 Postfach 10 15 01**
**D-6000 Frankfurt 1(DE)**

(72) Erfinder: **Röhrborn, Hans-Joachim, Dr.**
**Terniepenweg 83**
**D-4133 Neukirchen-Vluyn(DE)**
Erfinder: **Aderhodl, Clemens, Dr.**
**Lechenfeldstrasse 21**
**D-4150 Krefeld(DE)**
Erfinder: **Idel, Karsten-Josef, Dr.**
**Am Schwarzkamp 38**
**D-4150 Krefeld(DE)**
Erfinder: **Kirsch, Jürgen, Dr.**
**Hahnenweg 1**
**D-5000 köln 80(DE)**

(54) **Thermoplastische Formmassen.**

(57) Die erfindungsgemäßen thermoplastischen Formmassen aus teilkristallinen Thermoplasten und Bariumsulfat mit definierter Korngröße und/oder aktivierter Oberfläche weisen eine erhöhte Kristallisationsgeschwindigkeit auf und können daher bei niedrigen Formtemperaturen zu Formkörpern, Halbzeugen und Folien verarbeitet werden.

EP 0 335 159 A1

# Thermoplastische Formmassen

Die Erfindung betrifft thermoplastische Formmassen aus teilkristallinen Thermoplasten und Bariumsulfat mit definierter Korngröße und/oder aktivierter Oberfläche.

Die Verwendung von teilkristallinen Thermoplasten, wie Polyalkylenterephthalaten, insbesondere Polyethylenterephthalat (PET) als Formmasse für die thermoplastische Verarbeitung wird entscheidend dadurch behindert, daß aufgrund der schlechten Kristallisationsneigung von insbesondere Polyethylenterephthalat hohe Formtemperaturen und lange Zykluszeiten zur Herstellung von Spritzgußformteilen erforderlich sind.

Um ökonomisch bei niedrigen Formtemperaturen Polyethylenterephthalat zu verzugsarmen, hochwärmeformbeständigen Spritzgußteilen für beispielsweise Anwendungen im Elektro- und Elektronikbereich zu verarbeiten, ist es somit erforderlich, die schwache Kristallisationsneigung von Polyethylenterephthalat zu steigern.

Eine Möglichkeit die Kristallisationsgeschwindigkeit bei Polyethylenterephthalat zu erhöhen, besteht darin, dem teilkristallinen Thermoplasten Nukleierungsmittel zuzusetzen. Ein für diese Zwecke bekanntes Nukleierungsmittel ist z. B. Mikrotalk. Neben vielen anderen mineralischen Nukleierungsmitteln wird auch Bariumsulfat genannt. Allerdings wird beispielsweise in der EP-OS 215 364 auf Seite 1 herausgestellt, daß Bariumsulfat im Vergleich zu anderen inerten anorganischen Nukleierungsmitteln zu den weniger wirksamen Nukleierungsmitteln zu zählen ist. Als wirksame Nukleierungsmittel werden auch Alkalisalze organischer Säuren erwähnt. Diese haben jedoch den Nachteil, daß bedingt durch deren basischen Charakter oft ein Abbau des PET während der Herstellung und Verarbeitung erfolgt. Niedermolekulares PET kristallisiert zwar besser, zeigt aber auch deutlich schlechtere mechanische Eigenschaften.

Es wurde nun überraschend gefunden, daß durch Einstellung bestimmter Korngrößen und/oder chemoreaktiver Oberflächen von Bariumsulfat die Kristallisationsgeschwindigkeit von teilkristallinen Thermoplasten, insbesondere von Polyethylenterephthalat, deutlich gesteigert werden kann.

Gegenstand der vorliegenden Erfindung sind nun thermoplastische Formmassen aus

A) 50.0 bis 99.9 Gew.-Teilen teilkristallinen Thermoplasten, mit der Ausnahme, daß im Falle von Polyamid 6 als teilkristallinem Thermoplasten die Menge an Komponente A 50 bis 98.9 oder 99.1 bis 99.9 Gew.-Teile und im Falle von Polypropylen als teilkristallinem Thermoplasten die Menge an Komponente A 50 bis 59.9 oder 60.1 bis 99.9 Gew.-Teile beträgt

und

B1) 0.1 bis 50.0 Gew.-Teilen Bariumsulfat mit chemoreaktiver Oberfläche hergestellt durch Fällung von Bariumionen mittels Sulfationen in wäßrigem Medium in Gegenwart von zusätzlichen, mit Bariumionen fällbare und schwer lösliche Bariumverbindungen bildenden Anionen wasserlöslicher Verbindungen, wobei das erhaltene, gegebenenfalls mit Kupplungsmitteln nachbehandelte chemoreaktive Bariumsulfat Korngrößen von <0,1 µm [80 - 5 $m^2/g$ (nach BET)] aufweist, mit der Ausnahme, daß im Falle von Polyamid 6 als teilkristallinem Thermoplasten die Menge an Komponente B1) 0.1 bis 0.9 Gew.-Teile oder 1.1 bis 50 Gew.-Teile und im Falle von Polypropylen als teilkristallinem Thermoplasten die Menge an Komponente B1) 0.1 bis 39.9 oder 40.1 bis 50 Gew.-Teile beträgt

oder

B2) 0.1 bis 50.0 Gew.-Teilen ultrafeinem Bariumsulfat hergestellt durch Zusammenbringen getrennter wäßriger Lösungen, die jeweils äquivalente Mengen Bariumionen und Sulfationen enthalten, und Abtrennen des Präzipitats, wobei man zur Herstellung von gefälltem Bariumsulfat mit einer Primärkorngröße von <0,1 µm in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von < 1 µl vereinigt und die gebildete Suspension des Präzipitats kontinuierlich aus dem Reaktor abführt.

Bevorzugt sind thermoplastische Formmassen, die die Komponente A) zu 60 bis 99.9 Gew.-Teilen und die Komponenten B1) oder B2) zu 0.1 bis 40 Gew.-Teilen enthalten mit der zuvor beschriebenen Ausnahme für Polyamid 6 und Polypropylen als teilkristalline Thermoplaste.

Ganz besonders bevorzugt sind thermoplastischen Formmassen, die die Komponente A) zu 99.1 bis 99.9 Gew.-Teilen und die Komponenten B1) oder B2) zu 0.1 bis 0.9 Gew.-Teilen enthalten, mit der Ausnahme der Polyalkylenterephthalate, die die Komponente A) zu 95 bis 99,9 Gew.-Teilen und die Komponenten B1) oder B2) zu 0,1 bis 5,0 Gew.-Teilen enthalten.

Als teilkristalline Thermoplasten (Komponente A) kommen solche in Frage, die beim Abkühlen der Schmelze mit einer Kühlrate < 1 °C/min die Fähigkeit besitzen, teilweise zu kristallisieren und welche Schmelzenthalpien von 5 bis 130 J/g, bevorzugt 10 bis 100 J/g, besitzen. Die Schmelzenthalpien der teilkristallinen Thermoplaste können beispielsweise nach dem bekannten Verfahren der Differentialthermoanalyse bestimmt werden, wie sie z.B. bei Vieweg/Braun, Kunststoff-Handbuch, Band I, Seite 591 ff, Carl Hanser Verlag, München 1975, beschrieben ist.

Als teilkristalline Thermoplasten seien z. B. genannt: Polyalkylenterephthalate, Polyamide, Polyoxymethylen, Polyarylenoxide, Polyarylensulfide, Polyalkylene, bevorzugt Polyethylenterephthalat, Polybutylenterephthalat, Cyclohexandimethylenterephthalat, Polyphenylensulfid, besonders bevorzugt Polyethylenterephthalat.

Die in Frage kommenden Polyalkylenterephthalate lassen sich aus Terephthalsäure (oder ihren reaktionsfähigen Derivaten) und aliphatischen Diolen mit 2 bis 10 C-Atomen nach bekannten Methoden herstellen (Kunststoff-Handbuch, Band VIII, Seite 695 ff, Carl Hanser Verlag, München 1973).

Bevorzugte Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate können neben Terephthalsäureresten bis zu 20 Mol-% Reste anderer aromatischer oder cycloaliphatischer Dicarbonsäuren mit 8 bis 14 C-Atomen und/oder aliphatischer Dicarbonsäuren mit 4 bis 12 C-Atomen enthalten, wie Reste von Phthalsäure, Isophthalsäure, Naphthalin-2,6-dicarbonsäure, 4,4-Diphenyldicarbonsäure, Bernstein-, Adipin-, Sebacinsäure und Cyclohexandiessigsäure.

Die bevorzugten Polyalkylenterephthalate können neben Ethylenglykol- oder Butandiol-1,4-Resten bis zu 20 Mol-% andere aliphatische Diole mit 3 bis 21 C-Atomen oder cycloaliphatische Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxy-phenyl)-propan (s. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-OS 19 00 270 und der US-PS 36 92 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern) und Ethylenglykol hergestellt worden sind.

Die als Komponente A) vorzugsweise verwendeten Polyethylenterephthalate besitzen im allgemeinen eine Intrinsic-Viskosität von 0,4 bis 1,5 dl/g, vorzugsweise 0,5 bis 0,8 dl/g, die verwendeten Polybutylenterephthalate besitzen im allgemeinen eine Intrinsic-Viskosität von 0,7 bis 1,6 dl/g, vorzugsweise 0,8 bis 1,3 dl/g, insbesondere 0,8 bis 1,05 dl/g, jeweils gemessen in Phenol/o-Dichlorbenzol (1:1 Gew.-Teile) bei 25 °C.

Die als Komponente A) in Frage kommenden teilkristallinen Polyamide umfassen langkettige synthetische Polymere, die regelmäßig wiederkehrende Amidgruppen als integralen Bestandteil der Hauptpolymerkette besitzen und somit Amidestermischpolymere einschließen. Sie sind im Kunststoff-Handbuch, Band VI, Carl Hanser Verlag, München beschrieben. Polyamide können durch Polykondensation bzw. -addition difunktioneller Monomerer oder cyclischer Lactame (wie beispielsweise von ε-Aminocapronsäure bzw. ε-Caprolactam) oder durch Umsetzung eines konjugierten Monomerenpaares, wie beispielsweise eines Diamins und einer Dicarbonsäure, hergestellt werden.

Bevorzugte teilkristalline Polyamide können durch Polymerisation von Lactamen der Formel

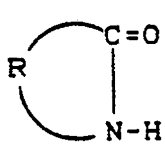

hergestellt werden, worin R eine Alkylengruppe mit 3 bis 13 oder mehr Kohlenstoffatomen, vorzugsweise mit 5 bis 13 Kohlenstoffatomen, bedeutet. Bevorzugte Lactame sind ε-Caprolactam, Pyrrolidon, Piperidon, Valerolactam, Capryllactam und Lauryllactam. Auch sind Mischpolyamide aus zwei oder mehreren Lactamen eingeschlossen. Bevorzugte Polyamine, die zur Herstellung von Polyamiden brauchbar sind, sind beispielsweise Propandiamin, Hexamethylendiamin und Octamethylendiamin. Bevorzugte Polycarbonsäuren sind beispielsweise Adipinsäure, Pimelinsäure, Suberinsäure, Sebacinsäure und Dodecansäure.

Bevorzugte teilkristalline Polyamide umfassen z. B. Polyamid 6, Polyamid 6,6, deren Gemische,

Blockpolyamide und Copolyamide aus ε-Caprolactam, Adipinsäure und Hexamethylendiamin, weiterhin Polyamid-11, Polyamid-12 und Polyamide, die aus aliphatischen Diaminen und Adipinsäure und/oder Isophthalsäure und/oder Terephthalsäure und/oder Sebacinsäure und/oder Azelainsäure und/oder Cyclohexandicarbonsäure aufgebaut sind.

Als aliphatische Diamine sind außer Hexamethylendiamin, 2,2,4- und 2,4,4-Trimethyl-hexamethylendiamin, Isophorondiamin, 1,3- und 1,4-Bis-aminocyclohexan, Bisaminocyclohexyl-alkane und Xylylendiamine zu nennen.

Außerdem kommen teilkristalline Polyamide in Betracht, die aus den genannten aliphatischen Dicarbonsäuren und aromatischen Diaminen wie z.B. m- und p-Phenylendiamin hergestellt werden, sowie Polyamidgemische und Copolyamide, aus allen genannten Komponenten, soweit alipha tische oder teilaliphatische Polyamide entstehen. Besonders bevorzugte Polyamide sind aliphatische Polyamide, insbesondere Polyamid-6 und Polyamid-6,6.

Bevorzugte Polyamide besitzen eine relative Viskosität von 2,0 bis 6,0, vorzugsweise 2,5 bis 4,5, gemessen an einer Lösung von 0,5 g Polyamid in 100 ml m-Kresol-Lösung bei 25 °C.

Die als Komponente A) in Frage kommenden Polyoxymethylene besitzen als Zahlenmittel bestimmte Molekulargewichte von 20 000 bis 100 000, vorzugsweise von 30 000 bis 50 000. Sie sind im Kunststoff-Handbuch, Band XI, Carl Hanser Verlag, München beschrieben.

Die als Komponente A) in Frage kommenden Polyalkylene, z. B. Polyethylen und Polypropylen, können nach Hoch-, Mittel und Niederdruckverfahren hergestellt werden und besitzen im allgemeinen als Zahlenmittel bestimmte Molekulargewichte von 20 000 bis 500 000, vorzugsweise von 50 000 bis 350 000. Sie sind im Band IV des Kunststoff-Handbuches beschrieben.

Die als Komponente A) in Frage kommenden Polyarylensulfide, z.B. das Polyphenylensulfid, können nach bekannten Verfahren hergestellt werden (vgl. z.B. US 3 354 129 und EP 171 021). Die als Komponente A) in Frage kommenden Polyarylenoxide werden wie in der Literatur beschrieben (H.M. van Dort et al., Europ. Polym. J. 4, 275 (1968)) hergestellt.

Als Komponente B1) der erfindungsgemäßen thermoplastischen Formmassen kann eingesetzt werden Bariumsulfat mit chemoreaktiver Oberfläche hergestellt durch Fällung von Bariumionen mittels Sulfationen in wäßrigen Medium in Gegenwart von zusätzlichen mit Bariumionen fällbaren und schwer lösliche Bariumverbindungen bildenden Anionen wasserlöslicher Verbindungen, wobei das erhaltene chemoreaktive Bariumsulfat Korngrößen von <0,1 µm, bevorzugt 0,09 bis 0,01 µm [80 bis 5 $m^2/g$, bevorzugt 50 bis 10 $m^2/g$, (nach BET)] aufweist.

Das beim Ausfällen von Bariumsulfat in Gegenwart von Anionen, die mit Bariumionen schwer lösliche Verbindungen bilden, entsprechender Konzentrationen erhaltene Produkt, enthält die Fremdionen entweder homogen über den Kristall verteilt oder diese an der Oberfläche angereichert.

Je nach Ladungsdichte und Molekülgröße der Anionen- bzw. Dotierungskomponenten werden Fehlstellen im $BaSO_4$-Kristallgitter besetzt bzw. Gitterplätze in statistischer Verteilung eingenommen oder es erfolgt mit langen apolaren Molekülresten eine Abschirmung der Oberflächenladung (Hydrophobierung).

Gemäß dem Verfahren können Anionen wasserlöslicher organischer oder anorganischer Verbindungen eingesetzt werden. In manchen Fällen kann es auch zweckmäßig sein, Gemische dieser Verbindungen zu verwenden.

Zur Durchführung des Verfahrens werden diese zusätzlichen Komponenten zweckmäßig der wäßrigen Lösung zuge setzt, welche die anorganische Sulfatkomponente, wie Alkalisulfat, enthält. Die zusätzliche Komponente wird in einer Menge von 0,1 bis 50 Gew.-%, bezogen auf das zu fällende Bariumsulfat, verwendet. Vorzugsweise wird die zusätzliche Komponente in einer Menge von 1 bis 10 Gew.-% eingesetzt.

Geeignete organische wasserlösliche verbindungen für das Verfahren sind Verbindungen aus der Gruppe Alkyl- und Arylsulfonate, Alkyl- und Arylsulfate oder Alkyl- und Arylphosphorsäureester, wobei der Alkyl- oder Arylrest gegebenenfalls durch funktionelle Gruppen teilweise substituiert sein kann, oder perfluorierte Alkyl- und Arylsulfonate. Beispielsweise werden in dem Verfahren der Erfindung eingesetzt;

Natriumdodecylbenzolsulfonat
Natriumlaurylsulfat
Natriumcetylsulfat
Phosphorsäuremonoethylmonobenzylester
Lithiumperfluoroctansulfonat.

Als Verbindungen, die mit funktionellen Gruppen substituierte Alkyl- oder Arylreste tragen, eignen sich solche mit Halogen, Hydroxyl-, Amino-, Imino-, Mercapto-, Carboxyl- oder Alkoxycarbonyl-Gruppen oder einer endständigen Doppelbindung, beispielsweise

12-Brom-1-dodecansulfonsäure
Natrium-10-hydroxy-1-decansulfonat

Natrium-Carrageenan
Natrium-10-Mercapto-1-Cetansulfonat
Natrium-16-Ceten(1)sulfat.

In dem Verfahren zur Herstellung von chemoreaktivem Bariumsulfat werden als Anionen wasserlöslicher anorganischer Verbindungen (andere anorganische Verbindungen als Sulfate) anorganische Verbindungen aus der Gruppe Thiosulfat, Silikat, Fluorid, Fluorsilikat, Monofluorphosphat oder Wolframat eingesetzt. Geeignete Verbindungen sind beispielsweise

Natriumthiosulfat ($Na_2S_2O_3 \bullet 5\ H_2O$)
Natriummetasilikat ($Na_2SiO_3$)
Natriumfluorid (NaF)
Lithiumhexafluorosilikat ($Li_2(SiF_6) \bullet 2\ H_2O$)
Natriumfluorophosphat ($Na_2PO_3F$)
Natriumpolywolframat ($3\ Na_2WO_4 \bullet 9\ WO_3 \bullet H_2$).

Die nach dem Verfahren hergestellten chemoreaktiven Bariumsulfat-Pigmente können eine für den vorgesehenen Verwendungszweck geeignete Nachbehandlung erfahren.

Sind der Bariumsulfatoberfläche z.B. durch die Dotierungskomponenten saure bzw. veresterbare Hydroxylgruppen, wie

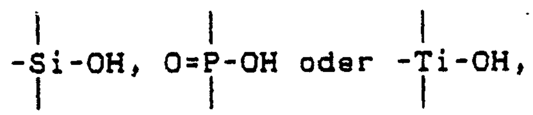

aufgeprägt oder befinden sich in der Kristallitoberfläche neben den $(SO_4)^{2-}$-Anionen durch Copräzipitation eingebrachte, andere chemisch umsetzbare Gruppen, wie $S^{2-}$, $SH^-$ oder $F^-$, so kann dieses $BaSO_4$-Pigment mit geeigneten Nachbehandlungskomponenten bzw. Kupplungsmitteln für das jeweilige Einsatzgebiet ausgerüstet werden. Ein im allgemeinen eingesetzter Haftvermittler bzw. Kupplungsmittel sind organofunktionelle Alkoxysilane, wie Vinyltrimethoxysilan. Es werden aber auch Alkoxytitanate, -zirkonate oder -aluminate eingesetzt. Das Aufbringen des Haftvermittlers erfolgt auf an sich bekannte Weise. Er kann in einem Lösungsmittel gelöst auf das Pigment aufgebracht werden, wobei das Lösungsmittel abgezogen und der Feststoff getrocknet wird. Oder die Belegung erfolgt bei flüssigen Haftvermittlern durch Verdüsen des Mittels auf das im Mischbett bewegte Pigmentpulver.

Das als Komponente B2) der thermoplastischen Formmasse zuzusetzende ultrafeine Bariumsulfat wird hergestellt durch Zusammenbringen getrennter wäßriger Lösungen, die jeweils äquivalente Mengen Bariumion bzw. Sulfation enthalten, und Abtrennen des Präzipitats, wobei man zur Herstellung von gefälltem Bariumsulfat mit einer Primärkorngröße von <1 µm in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 µl vereinigt und die gebildete Suspension des Präzipitats kontinuierlich aus dem Reaktor abführt. In der wäßrigen Lösung des Sulfations kann auch ein weiteres Anion wasserlöslicher anorganischer oder organischer Verbindung enthalten sein, das schwerlösliche Bariumverbindungen bildet.

Nach dem Verfahren werden somit kleine Teilvolumina der Reaktionslösungen in hoher Anzahl, beispielsweise mehr als $10^6$ pro sec, zusammengebracht und in einem Reaktionsvolumen einer mittleren Volumengröße von < 1 µl die Fällung rasch und vollständig herbeigeführt.

Zur Durchführung des Verfahrens werden die jeweiligen wäßrigen Lösungen der Reaktanden kontinuierlich jeweils in Tropfenform einer mittleren Tropfengröße von <0,5 µl rasch zusammengebracht und in einem Fällvolumen einer mittleren Volumengröße von <1 µl vereinigt.

Nach einer weiteren Ausgestaltung der Verfahrens überführt man die wäßrige Lösung des einen Reaktanden kontinuierlich in eine Tropfenform einer mittleren Tropfengröße von <0,5 µl und bringt diese Tropfen kontinuierlich in einen fließenden Film der wäßrigen Lösung des anderen Reaktanden ein.

Das heißt mit anderen Worten, es werden Tröpfchen der wäßrigen Lösung des einen Reaktanden mit Tröpfchen des anderen Reaktanden mit hoher Geschwindigkeit zusammengebracht, oder es werden die Tröpfchen der wäßrigen Lösung des einen Reaktanden in den fließenden Film der wäßrigen Lösung des anderen Reaktanden mit hoher Geschwindigkeit eingeschleudert, beispielsweise die Tröpfchen einer wäßrigen Bariumchloridlösung in den Rieselfilm einer wäßrigen Natriumsulfatlösung.

Das Verfahren wird zweckmäßig in einem vertikalen, zylinderförmigen geschlossenen Reaktor durchgeführt. Der Reaktor weist hierbei in seinem Kopfteil an sich bekannte Mittel bzw. Vorrichtungen zur Zerteilung von wäßrigen Komponentenlösungen in feinste Tröpfchen auf, wie auch Mittel zur Erzeugung eines

Rieselfilms aus wäßrigen Komponentenlösungen. In seinem Bodenteil ist ein derartiger Reaktor zweckmäßig konisch gestaltet und mit Abzugseinrichtungen für das Reaktionsgemisch bzw. für die Fällungssuspension versehen.

Die Tropfenform der Reaktionslösung kann im Kopfteil des zylindrischen Reaktors durch Zerstäubung der Lösung unter Druck, beispielsweise Düsen, oder durch Einwirkung von Zentrifugalkraft auf die Lösung erzeugt werden, beispielsweise Zerstäuberscheiben. Die Tröpfchen haben eine Größe von <0,5, vorzugsweise von 0,001 bis 0,25 µl. Der Rieselfilm an der Innenwand des Reaktors wird in einer Dicke von 1 bis 10 mm erzeugt.

Die Tröpfchenströme der wäßrigen Lösungen können diametral oder in einem Winkel gegeneinander gerichtet werden. Die Tröpfchenströme können des weiteren aber auch parallel in gleicher Richtung im Reaktor geführt und zur gegenseitigen Durchdringung und Fällung gebracht werden.

Der an der Reaktorwandung ablaufende Film der Fällungssuspension wird im unteren Teil des Reaktors gesammelt und über eine Dosiervorrichtung aus dem Reaktor ausgetragen und auf den Feststoff, wie ultrafeines Bariumsulfat einer Primärkorngröße unter0,1 µ, bevorzugt 0,09 bis 0,01 µ [Oberfläche (BET): 80 bis 5 $m^2/g$, bevorzugt 40 bis 10 $m^2/g$] aufgearbeitet.

Der Zusatz des Bariumsulfats mit chemoreaktiver Oberfläche oder des ultrafeinen Bariumsulfats kann zu jedem Zeitpunkt der Thermoplast-Herstellung erfolgen. Bevorzugt ist die Zugabe der Komponenten B) in Form einer Slurry aus dem (den) Reaktionspartner(n) oder einem inerten Reaktionslösungsmittel zu jedem Zeitpunkt der Reaktion. Beispielsweise kann bei der Polyalkylenterephthalatsynthese eine $BaSO_4$/ $C_2$- bis $C_3$-Alkandiol- Slurry, besonders bevorzugt zur Herstellung erfindungsgemäßer Polyethylenterephthalate eine $BaSO_4$.Ethylenglykol-Slurry, zu jedem Zeitpunkt der Reaktion zugegeben werden. Es ist aber auch möglich die Komponente B) in Form eines hochkonzentrierten Compounds zu der Schmelzcompoundierung zuzugeben.

Die erfindungsgemäßen thermoplastischen Formmassen können übliche Verarbeitungshilfsmittel wie Fließ- und Entformungsmittel, Füll- und Verstärkungsmittel, wie Talkum, Kreide und Glasfasern, organische Fasern, Pigmente wie Titandioxid und Ruß, Brandschutzmittel, wie Halogenverbindungen, Antimontrioxid, und Stabilisatoren, wie niedermolekulare Phosphite, enthalten. Ebenso können mit den erfindungsgemäßen teilkristallinen, nukleierten Thermoplasten nach bekannten Verfahren wie z.B. Schmelzextrusion Legierungen mit anderen Thermoplasten hergestellt werden.

Die üblichen Verarbeitungshilfsmittel werden den Formmassen in einer für den jeweiligen Zweck ausreichenden und wirksamen Menge zugesetzt.

Die erfindungsgemäßen thermoplastischen Formmassen lassen sich zu Formkörpern, Halbzeugen und Folien verarbeiten.

Die erfindungsgemäßen thermoplastischen Formmassen besitzen den Vorteil, daß sie rascher kristallisieren und deshalb bei niedrigen Formentemperaturen (keine ölbeheizten Formen) bzw. bei deutlich kürzeren Spritzzyklen verarbeitet werden können. Hierbei resultieren schwindungsarme Formteile mit hoher Wärmeformbeständigkeit. Insbesondere so erhaltene PET-Formmassen zeichnen sich im Vergleich zu konventionell mit bekannten Nukleierungsmitteln erhaltene PET-Massen durch hohe Vicat B-Werte aus.

## Beispiele

Komponente A):

### Polyethylenterephthalat (PET):

PET wird erhalten nach Reaktion von Dimethylterephthalat (DMT) und Ethylenglykol (EG) und anschließender Polykondensation. Dabei sind mol-Verhältnisse von DMT zu EG von 1,0 zu 1,2 bis 3,5 möglich. Als Katalysatoren kommen dabei Verbindungen der Elemente Mn, Mg, Ge, Sb, Zn, Co, Ti, Ca, Sn u. a. sowie Kombination dieser Elemente in Frage. Ein Zusatz der Komponente B1 bzw. B2 kann praktisch zu jedem Zeitpunkt der Reaktion erfolgen.

Typischer Ansatz:

5.825 g Dimethylterephthalat, 4.656 g Ethylenglykol und 287,2 g 10,1 Gew.-% bariumsulfathaltige

Ethylenglykol-slurry sowie 4,26 g Titantetraisopropylat werden nach Spülung der Apparatur mit Stickstoff innerhalb von 1 h auf 180 °C erhitzt und bei dieser Temperatur gehalten. Danach wird die Temperatur auf 190 °C für 1,5 h erhöht. Innerhalb weiterer 1,5 h erfolgt eine weitere Temperaturerhöhung auf 250 °C. Nach 15 min bei dieser Temperatur wird der Druck auf < 1 mbar erniedrigt und überschüssiges Ethylenglykol abdestilliert. Innerhalb von 30 min wird die Temperatur auf 275 °C gesteigert und ca. 30 -60 min dort belassen. Nach Belüften der Apparatur mit Stickstoff und Absetzen der Schmelze wird abgesponnen.
Ausbeute: 4.843 g (85 %) Polyethylenterephthalat, I. V. 0,71.

Komponenten B1) und B2):

Beispiel 1

a) Zur Herstellung eines bariumsulfats mit chemoreaktiver Oberfläche (entsprechend Komponente B1) wurden in einer Fällzelle unter Rühren eine Bariumchlorid-Lösung mit einer Natriumsulfat-Lösung zur Reaktion gebracht. Vor der Umsetzung wurde die $Na_2SO_4$-Lösung (Dichte 1,088 g/ml) mit 7 g Natriumhydroxid pro Liter $Na_2SO_4$-Lösung alkalisch eingestellt und sodann mit 32 g $Na_2SiO_3$-Lösung (Dichte 1,346 g/ml) pro Liter Sulfatlösung versetzt. In der Vorrichtung wurden 105,7 ml/min $BaCl_2$-Lösung (Dichte 1,073 g/ml) und 896 ml/min der silikathaltigen $Na_2SO_4$-Lösung durchgesetzt. Der Niederschlag wurde abfiltriert, mehrmals mit Wasser gewaschen und bei 110 °C getrocknet. Die naßchemische Analyse des Trockenproduktes ergab einen $SiO_2$-Gehalt von 0,62 %. Die BET-Oberfläche des Produkts betrug 18,3 $m^2/g$.

b) Zwecks Oberflächenmodifizierung eines nach a) hergestellten silikathaltigen Bariumsulfates mit einer Vinylgruppierung wurde dieses in wasserfreiem Isopropanol dispergiert (Feststoffgehalt 10 Gew.-%). Unter Rühren wurde eine 1 %ige Lösung von Vinyltrimethoxysilan in wasserfreiem Isopropanol in einer Menge zugetropft, daß in der Anschlämmung 0,5 Gew.-% des Silans, bezogen auf das Pigment, vorlagen. Die Dispersion wurde ca 1 Stunde bei ca. 40 °C gerührt und dann abfiltriert. Das unverbrauchte physisorptiv gebundene Silan wurde anschließend mit wasserfreiem Isopropanol aus dem Feststoff ausgewaschen und letzterer getrocknet. Es fiel ein $BaSO_4$ an, auf dem IR-spektroskopisch die Vinylgruppierung nachgewiesen werden konnte.

Beispiel 2

Zwecks Fällung eines ultrafeinen Bariumsulfats (ent-sprechend Komponente B2) aus wäßrigen Lösungen von Bariumchlorid und Natriumsulfat mittels einer Verdüsungsvorrichtung wurde in einem geschlossenen, vertikalen zylindrischen Reaktor (Durchmesser 300 mm) durch eine Ringdüse Natriumsulfatlösung der Dichte 1,033 g/ml in solcher Weise eingepumpt, daß ein fließender dünner Fallfilm auf der Innenwand des Reaktors entstand. Die Zuführung der Bariumchloridlösung (Dichte 1,162 g/ml) erfolgte unterhalb der Ringdüse über ein konzentrisch angeordnetes Zentrifugalzerstäuberrad mit Radialkanälen bei 40.000 Upm. In dem Rieselfilm wurde jeweils durch die Tröpfchen ein Fällvolumen von kleiner als 0,001 $cm^3$ erzielt. Die gebildete Bariumsulfatsuspension wurde am unteren Rohrende aufgefangen, von der Mutterlauge befreit, gewaschen und bei 110 °C getrocknet. Bei einem Molverhältnis Natriumsulfat:Bariumchlorid von 1:0,7 und den Durchsätzen 0,83 mol/min Bariumchlorid bzw. 1,19 mol/min Natriumsulfat wurde ein ultrafeines Bariumsulfat einer Korngröße von 0,07 $\mu m$ gewonnen. Die Bestimmung der spezifischen Oberfläche nach BET am Pulverprodukt ergab einen Wert von 33 $m^2/g$.

Beispiel 3

Die Fällung eines ultrafeinen Bariumsulfats (entsprechend Komponente B 1 und 2) aus einer wäßrigen Lösung von Natriumsulfat und einer wäßrigen, Natriumlaurylsulfat enthaltenden Natriumsulfatlösung wurde in einer Zerstäubervorrichtung vorgenommen. Hierzu wurden zwei Zerstäuberdüsen in einem geschlossenen, zylindrischen, vertikalen Reaktor so angeordnet, daß sich ihre Austrittsöffnungen in einem Abstand von 500 mm gegenüberlagen und die Sprühkegel in der vertikalen Kontaktfläche einen deckungsgleichen Kreis bildeten. Durch die eine Düse wurde eine wäßrige Bariumchloridlösung (Dichte von 1,050 g/ml) bei einem Luftdruck von 6 bar zerstäubt, während gleichzeitig durch die andere Düse eine Natriumsulfatlösung, enthaltend 2,5 g Natriumlaurylsulfat pro Liter $Na_2SO_4$-Lösung (Dichte von 1,104 g/ml) und einem Druck von

3,2 bar zerstäubt wurde.

Es wurden 44,2 l/h der Natriumlaurylsulfat enthaltenden Natriumsulfatlösung und 81,8 l/h Bariumchloridlösung durchgesetzt. Die gebildete Bariumsulfatsuspension wurde aufgefangen, von der Mutterlauge befreit, mehrmals mit Wasser gewaschen bis zu einer Leitfähigkeit der Suspension von 100 µS/cm und sodann bei 110 °C getrocknet. Die Kohlenstoffbestimmung des trockenen Produktes ergab einen Kohlenstoffgehalt von 0,32 %. Die Bestimmung der spezifischen Oberfläche des Pulverproduktes nach BET ergab einen Wert von 36 $m^2$/g. Dies entspricht einer Primärkorngröße von 0,038 µm.

## Beispiel 4

Zwecks Herstellung eines ultrafeinen, salzarmen Bariumsulfats (entsprechend Komponente B2) wurde die Fällung in einer Zerstäubervorrichtung durch Umsetzung einer Bariumhydroxidlösung mit Schwefelsäure vorgenommen.

Mit einer Dreistoff-Zerstäuberdüse, die zentral im Deckel eines geschlossenen, vertikalen, zylindrischen Reaktors befestigt war, wurden Bariumhydroxidlösung (Dichte 1,160 g/ml bei 75 °C) und Schwefelsäure (Dichte 1,060 g/ml bei 25 °C) bei einem Druck von 3,3 bar zerstäubt. Die beiden Reaktanden trafen an der Düsenmündung in einem kreisförmigen Vollkegel aufeinander. Es wurden 12,6 l/h $Ba(OH)_2$-Lösung und 12,3 l/h Schwefelsäure durchgesetzt. Die entstandene $BaSO_4$-Suspension wurde aufgefangen, der pH-Wert auf 6,5 bis 7,0 eingestellt, das Fällprodukt abgetrennt und bei 110 bis 120 °C getrocknet.

Die spezifische Oberfläche des Trockenproduktes nach BET ergab einen Wert von 51,5 $m^2$/g. Dies entspricht einer Primärkorngröße von 0,026 µm.

## Thermoplastische Formmassen:

Entsprechende thermoplastische Formmassen können erhalten werden:

1. Nach der für Komponente A angegebenen Vorschrift (gegebenenfalls Einarbeitung von üblichen Verarbeitungshilfsmitteln durch Extrusion).
2. Durch Schmelzextrusion der nach 1. erhaltenen Komponente A als hochkonzentriertes $BaSO_4$/PET mit kommerziell erhältlichem PET.
3. Auf ähnliche Weise können andere teilkristalline Thermoplaste mit verbesserter Kristallisationsneigung hergestellt werden.

Es werden folgende Ergebnisse erhalten:

| Versuch | | Bariumsulfat-Typ | Gew.-Teile | Zugabezeitpunkt | Viscosität (I. V.) | Vicat B °C |
|---|---|---|---|---|---|---|
| 1 | | B2 | 0,5 | über 5%iges Masterbatch | 0,72 | 144 |
| 2 | | B1 | 1,0 | wie Vers. 1 | 0,65 | 169 |
| 3 | (Vergleich) | Microtalk | 2,0 | 10%iges Masterbatch in PET | 0,72 | 105 |
| 4 | | B1 | 0,5 | vorgelegt bei Synthesebeginn | 0,65 | 195 |
| 5 | | B1 | 5,0 | wie Versuch 4 | 0,67 | 199 |
| 6 | | B1 | 0,5 | während der Polykondensation | 0,68 | 189 |
| 7 | (Vergleich) | Microtalk | 0,5 | vorgelegt bei Synthesebeginn | 0,70 | 145 |
| 8 | | B2 | 1,0 | während der Schmelzextrusion | 0,64 | 174 |
| 9 | | B1 | 1,0 | wie Vers. 7 | 0,64 | 184 |
| 10 | (Vergleich) | Microtalk | 2,0 | wie Vers. 7 | 0,65 | 160 |

Formtemperatur: 80 °C

Vicat B - Testmethode: ISO R 306-1974 am 80 x 10 x 4 mm Prüfstab

Die Ergebnisse in der Tabelle zeigen, daß bei vergleichbarem Viskositätsniveau die Bariumsulfate (B1 sowie B2) im Vergleich mit üblichem Nukleierungsmittel deutlich höhere Vicat-B-Werte liefern.

## Ansprüche

1. Thermoplastische Formmassen aus

A) 50.0 bis 99.9 Gew.-Teilen teilkristallinen Thermoplasten, mit der Ausnahme, daß im Falle von Polyamid 6 als teilkristallinem Thermoplasten die Menge an Komponente A 50 bis 98.9 oder 99.1 bis 99.9 Gew.-Teile und im Falle von Polypropylen als teilkristallinem Thermoplasten die Menge an Komponente A 50 bis 59.9 oder 60.1 bis 99.9 Gew.-Teile beträgt

und

B1) 0.1 bis 50.0 Gew.-Teilen Bariumsulfat mit chemoreaktiver Oberfläche hergestellt durch Fällung von Bariumionen mittels Sulfationen in wäßrigem Medium in Gegenwart von zusätzlichen, mit Bariumionen fällbare und schwer lösliche Bariumverbindungen bildenden Anionen wasserlöslicher Verbindungen, wobei das erhaltene, gegebenenfalls mit Kupplungsmitteln nachbehandelte chemoreaktive Bariumsulfat Korngrößen von <0,1 µm [5 - 80 $m^2/g$ (nach BET)] aufweist, mit der Ausnahme, daß im Falle von Polyamid 6 als teilkristallinem Thermoplasten die Menge an Komponente B1) 0.1 bis 0.9 Gew.-Teile oder 1.1 bis 50 Gew.-Teile und im Falle von Polypropylen als teilkristallinem Thermoplasten die Menge an Komponente B1) 0.1 bis 39.9 oder 40.1 bis 50 Gew.-Teile beträgt

oder

B2) 0.1 bis 50.0 Gew.-Teilen ultrafeinem Bariumsulfat hergestellt durch Zusammenbringen getrennter wäßriger Lösungen, die jeweils äquivalente Mengen Bariumionen und Sulfationen enthalten, und Abtrennen des Präzipitats, wobei man zur Herstellung von gefälltem Bariumsulfat mit einer Primärkorngröße von <0,1 µm in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von < 1 µl vereinigt und die gebildete Suspension des Präzipitats kontinuierlich aus dem Reaktor abführt.

2. Thermoplastische Formmassen nach Anspruch 1, dadurch gekennzeichnet, daß als teilkristalline Thermoplasten solche eingesetzt werden, die beim Abkühlen der Schmelze mit einer Kühlrate von <1 °C/min teilweise kristallisieren und Schmelzenthalpien von 5 bis 100J/g besitzen.

3. Thermoplastische Formmassen nach Ansprüchen 1 und 2, dadurch gekennzeichnet, daß man als teilkristalline Thermoplasten Polyalkylenterephthalate, Polyamide, Polyalkylene, Polyoxymethylen, Polyarylensulfide oder Polyarylenoxide, einsetzt.

4. Thermoplastische Formmassen nach Ansprüchen 1 bis 3, dadurch gekennzeichnet, daß man als teilkristalline Thermoplasten Polyalkylenterephthalate, Polybutylenterephthalat, Cyclohexandimethylenterephthalat oder Polyphenylensulfid einsetzt.

5. Thermoplastische Formmassen nach Ansprüchen 1 bis 4, dadurch gekennzeichnet, daß man als teilkristallinen Thermoplast Polyethylenterephthalat einsetzt.

6. Thermoplastische Formmassen nach Ansprüchen 1 bis 5, dadurch gekennzeichnet, daß das als Komponente B1) eingesetzte Bariumsulfat mit chemoreaktiver Oberfläche hergestellt wird in Gegenwart von organischen wasserlöslichen Verbindungen aus der Gruppe Alkyl- und Arylsulfonate, Alkyl- und Arylsulfate, Alkyl- und Arylphosphonsäureester, wobei der Alkyl-oder Arylrest gegebenenfalls durch funktionelle Gruppen teilweise substituiert sein kann, perfluorierte Alkyl- und Arylsulfonate oder in Gegenwart von Anionen wasserlöslicher anorganischer Verbindungen aus der Gruppe Thiosulfat, Silikat, Fluorid, Fluorsilikat, Monofluorphosphat oder Wolframat, wobei das Bariumsulfat gegebenenfalls mit einem Kupplungsmittel nachbehandelt ist.

7. Thermoplastische Formmassen nach Ansprüchen 1 bis 6, dadurch gekennzeichnet, daß man das Bariumsulfat B1) oder B2) mit den Reaktionspartnern oder einem geeigneten Reaktionsgemisch in einer hochkonzentrierten Slurry zu jedem Zeitpunkt der Polymersynthese zugibt.

8. Thermoplastische Formmassen nach Ansprüchen 1 bis 7, dadurch gekennzeichnet, daß eine Bariumsulfat (B1 oder B2)/$C_2$- bis $C_8$-Alkandiol-Slurry eingesetzt wird.

9. Verwendung der thermoplastischen Formmassen nach Ansprüchen 1 bis 6 zur Herstellung von Formkörpern, Halbzeugen und Folien.

Europäisches Patentamt

# EUROPÄISCHER RECHERCHENBERICHT

Nummer der Anmeldung

EP 89 10 4345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 293 622 (METALLGESELLSCHAFT AG)<br>* Ansprüche; Beispiele *<br>--- | 1-9 | C 08 K 3/30<br>C 09 C 1/02<br>C 01 F 11/46 |
| X | CA-A-1 032 683 (FIBER INDUSTRIES INC.)<br>* Ansprüche *<br>--- | 1-8 | |
| P,Y | DE-A-3 703 377 (METALLGESELLSCHAFT AG)<br>* Ansprüche; Spalte 3, Zeilen 30-36 *<br>--- | 1-9 | |
| Y | GB-A-2 169 906 (SUZANNE GILLIAN CARUS)<br>* Ansprüche; Seite 1, Zeilen 25-46 *<br>----- | 1-9 | |
| | | | **RECHERCHIERTE SACHGEBIETE (Int. Cl.4)** |
| | | | C 08 K<br>C 08 L<br>C 01 F<br>C 09 C |

Der vorliegende Recherchenbericht wurde für alle Patentansprüche erstellt

| Recherchenort | Abschlußdatum der Recherche | Prüfer |
|---|---|---|
| DEN HAAG | 04-07-1989 | DE LOS ARCOS Y VELAZQUEZ |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)